# EUROPEAN PATENT APPLICATION

(11) **EP 2 549 395 A1**
(43) Date of publication of application: **23.01.2013**
(21) Application number: 12174676.2
(22) Date of filing: 02.07.2012
(51) Int. Cl.: G06F 17/30, G06F 9/445

(54) **Systems, methods and apparatus for fast file transfer**

(30) Priority: 18.07.2011 US 201161508979 P; 16.02.2012 US 201213398385
(71) Applicant: Honeywell International Inc., Morristown, NJ 07962-2245 (US)
(72) Inventor: Nutaro, Joseph J., Morristown, NJ 07962-2245 (US); Eagleton, Stephen, Morristown, NJ 07962-2245 (US); Olson, Robert, Morristown, NJ 07962-2245 (US); Vatcher, Toni, Morristown, NJ 07962-2245 (US)
(74) Representative: Houghton, Mark Phillip

(57) **Abstract**

Methods and systems are provided for updating a base file used by certified software that is executing on a processor within a first computing device without breaking a certification of the software. The method comprises receiving a software object at a communications interface of the first computing device, the software object containing instructions that when executed by the processor interfaces with the certified software and integrates a delta file with the base file to create an updated file within the first computing device. The method further comprises installing the software object in a random access memory (RAM) and initializing the software object in the processor from the RAM. After installing the software object, receiving the delta file and providing the delta file for combination with the base file by the software object and after the combination is complete, erasing the software object from the RAM.

## Description

### PRIORITY

The instant application claims priority benefit to previously filed provisional application 61/508,979 that was filed on July 18, 2011 and which is hereby incorporated by reference in its entirety.

### TECHNICAL FIELD

The present subject matter disclosed herein below relates to the fast file transfer of a file update (i.e. a "delta file") from a front end interface device to a back end application server over a network. The subject matter more specifically relates to the fast transfer of a delta from the front end interface device to an avionics database of an aircraft in compliance without invalidating previously established FAA certification of the delta and/or the database.

### BACKGROUND

The following detailed description is merely exemplary in nature and is not intended to limit the invention or the application and uses of the invention. Furthermore, there is no intention to be bound by any theory presented in following detailed description.

The following discussion is presented with reference to an aircraft; however, the concepts and principles of the present subject matter are applicable to other types of vehicles and to non-vehicular computer applications. That is, the concepts and principles discussed below are also applicable to terrestrial vehicles (e.g. automobiles, trucks, military vehicles, and the like) and watercraft (e.g., ships, boats, submarines and the like).

Modem aircraft employ complex avionics systems which utilize a variety of security and integrity safeguards. These safeguards prevent unauthorized access to data, inadvertent corruption of data and the improper use of data while in use. Some of these safeguards are technical and some are procedural such as FAA certification. For example, some certified avionics systems operate in a "flight" mode while airborne that prevents certain data to be changed. Critical avionics software and their associated databases are commonly stored on non-volatile memory and when on the ground shift to a "download" mode such that the systems are updateable during maintenance or turnaround.

Over the years, significant effort has been made to reduce the weight and size of avionics and onboard communications electronics. As such, communication busses for local area networks aboard aircraft are necessarily relatively narrow digital pipelines or have local bandwidth bottlenecks. For example, the wireless transfer rate over a 3G+ wireless link such as HSPA+ ranges between approximately two to four megabits per second taking into consideration bottlenecks at the internet links as well as the cellular connection itself. Thus, the uploading of a 500 megabyte file could take 20 or 30 minutes. With the growing complexity of avionics and the growing size of the databases that drive the avionics, the size of files being transferred challenge the capacity of the existing pipelines. HSPA+ is also known as Evolved High-Speed Packet Access and is a wireless broadband standard defined in 3 Generation Partnership Program (3GPP) release 7 and above.

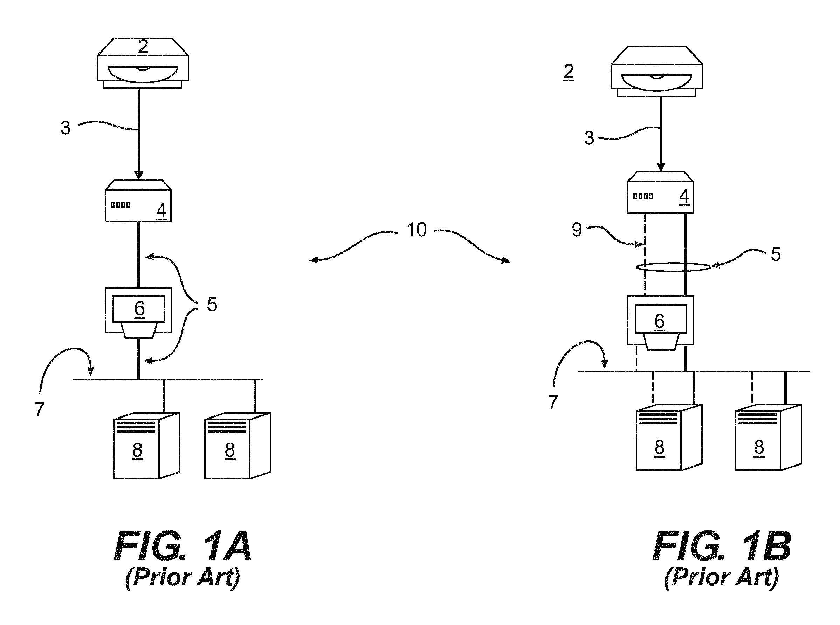

With reference now to the figures, FIG. 1A is an illustration of a simplified aircraft communication system 10 by which a digital file may be uploaded from a data source 2 to a database DB-A that is resident in one or more line replaceable units (LRUs) 8 using a data loader 6. A LRU is defined herein as an essential support item which is removed and replaced at the field level to restore the end item (e.g., an aircraft) to an operational ready condition. Conversely, a non-LRU is a part, component, or assembly used in the repair of an LRU, when the LRU has failed and has been removed from the end item for repair. (See, MIL-PRF-49506, Notice 1 of 18 Jan 05, "Performance Spec for Logistics Management Information").

The data source 2 may be any suitable data source known in the art that is in communication with a communication interface device 4 over any suitable communications medium or network protocol known in the art or that may be developed in the future. For example, the data source 2 may be a data storage device (e.g., a thumb drive) or computing device such as a server or a laptop computer.

The communication medium may be any suitable communications medium known in the art and may be a wired medium or a wireless medium. Such a communication medium may be a network 3, in which case the communication interface device 4 may be one of a variety of wireless protocol servers or gateways as may be known in the art. Examples of wireless protocols include, among others, WiFi, Cellular, Bluetooth, wireless USB, Zigbee, and the like. Alternatively, the communication medium may be a wired medium using the Ethernet, firewire, or other wired protocol known in the art. Herein below, the subject matter disclosed will be discussed in the context of a wireless network. Thus, the communication interface device 4 will hereinafter be referred to as a wireless interface device 4.

In addition to receiving data over the wireless network 3 from data source 2, the wireless interface device 4 also performs other tasks. For example, the wireless interface device 4 performs cyclic redundancy checks (CRC), as are commonly understood in the art, on incoming data files. A CRC is an error-detecting code designed to detect accidental changes to raw computer data. Conventionally, the wireless interface device 4 also performs signature authentication or encryption security and typically combines an existing data base file with a database update file received from the data source 2 commonly called a "delta" file 9. Once received from the wireless interface device 4, an updated data file or a delta file 9, is transmitted to a data loader via an input bus 5. The data loader 6, in turn loads the received file into one or more LRUs 8.

Once received, the data loader 6 distributes data received by the wireless interface device 4, such as a database, over the aircraft's local area network (LAN) 7 to the various LRUs 8 onboard the aircraft. The data loader 6 may be any suitable data loader known in the art or that may be devised in the future. Avionic data loaders are well known in the art and will not be described more fully herein. A typical example of a data loader is a Series 615 data loader sold by various companies, in accordance with standards created by Aeronautical Radio, Incorporated (ARINC) of Annapolis Maryland.

Thus, using the conventional data loading architecture illustrated in FIG. 1A, a new version of an avionics database is received from the data source 2 where it is processed in the wireless interface device 4 to update or replace a local copy of the database stored at the wireless interface device 4. The entire database is then transmitted over the aircraft's LAN 7 to the various receiving LRUs 8. LAN 7 may be wired or wireless via radio or other means such as infrared transmission. The large size of current data bases transmitted in this manner requires a considerable amount of time to upload. Individual databases can exceed 500 megabytes and because several databases of varies sizes must be loaded the totals can exceed several gigabytes.

Referring to FIG. 1B, in alternative prior art systems a delta file is received by and uploaded by the data loader 6. In these prior art systems the existing database and the update delta file are combined at the target LRU, thus allowing reduced transmission times as only the delta file. An exemplary method for combining a delta file with an existing database file can be found in U.S. Patent Application 7,401,192, which is incorporated herein by reference in its entirety.

### BRIEF SUMMARY

A method is provided for updating a base file used by certified software that is executing on a processor within a first computing device without breaking a certification of the software. The method comprises receiving a software object at a communications interface of the first computing device, the software object containing instructions that when executed by the processor interfaces with the certified software and integrates a delta file with the base file to create an updated file within the first computing device. The method further comprises installing the software object in a random access memory (RAM) and initializing the software object in the processor from the RAM. After installing the software object, receiving the delta file and providing the delta file for combination with the base file by the software object and after the combination is complete, erasing the software object from the RAM.

A system is provided for updating a base file used by certified software that is executing on a processor within a second computing device without breaching a certification of the software. The system comprises a first computing device containing a software object recorded therein, the first computing device configured to supply a delta file that updates the base file; and a second computing device. The second computing device comprises a processor, a random access memory (RAM) and a communication interface in electronic communication with the first computing device, the processor and the RAM,. The communication interface is configured to receive the software object and the delta file from the first computing device, the software object containing instructions that when executed by the processor interfaces with the certified software and integrates a delta file with the base file to create an updated data file within the second computing device. The communication interface is further configured to install the software object in the random access memory (RAM) and initialize the software object in the processor from the RAM. After installing the software object, communication interface provides the delta file for combination with the base file by the software object, and after the combination is complete the communication interface erases the software object from the RAM.

### BRIEF DESCRIPTION OF THE DRAWINGS

FIG. 1A is a functional block diagram of a prior art system for uploading a database to an exemplary avionics system;

FIG. 1B is a functional block diagram of an alternative prior art system for the uploading of a database delta file to an exemplary avionics system; and

FIG. 2 is a functional block diagram of a system for the fast transfer of a database delta file according to embodiments.

FIG. 3 is a block flow diagram of a method for fast transfer of a data file.

### DETAILED DESCRIPTION

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically non-sensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

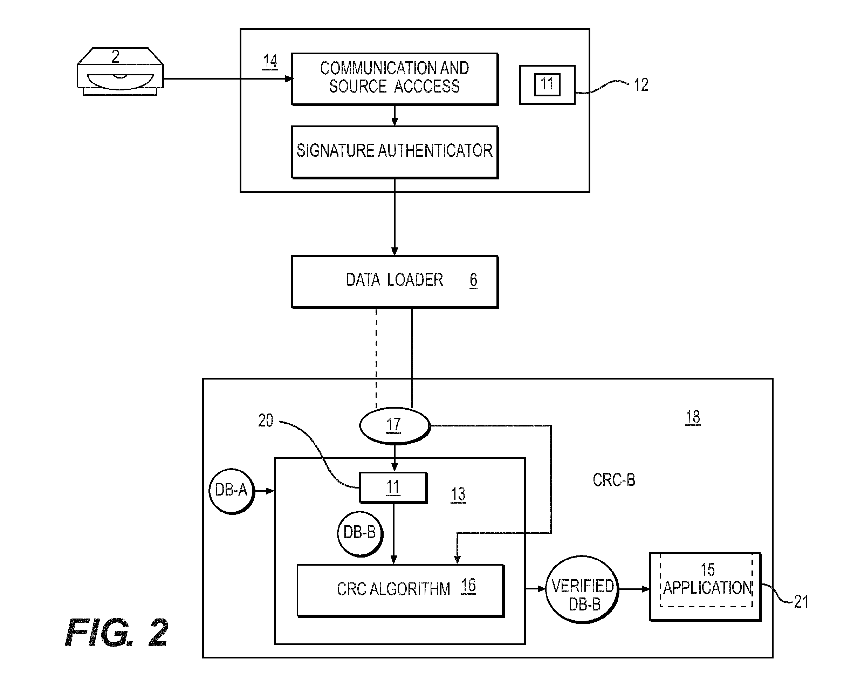

Fig. 2 is a functional block diagram of a system architecture configured for the rapid transfer of a database delta file. The system of FIG. 2 is an improvement over the prior art in that certain functions are removed from the conventionally configured wireless interface device 14 into the LRU 18. Thus, the wireless interface device 14 may only carry out non-data processing functions such as accessing and communicating with data source 2 and performing communications authentication (e.g., signature authentication), as may be known in the art, to ensure that the data being received is being received from the proper source. Communication authentication protocols may be required to be written to a certified level of safety as described in an airspace document, such as RTCA DO178B As a non-limiting example, the data received from data source 2 may be a delta file for a database A (DB-A) and a CRC for the final updated database B (DB-B), which would be database A (DB-A) after it has been updated by the delta file.

The wireless interface device 14 may also store a software object 11 in a memory location in a memory device 12. However, in other embodiments the software object 11 may be stored in the data loader 6 or elsewhere other than the LRU 18. The software object 11 is a specialized executable software object or executable code that contains instructions on how to integrate/combine a delta file to update an existing database such as database A (DB-A). As a non-limiting example, the software object may be a specially programmed Applet. An applet is any small application that performs one specific task that runs within the scope of a larger program, often as a plug-in.

After authentication, the data 9 received by the wireless interface device 14 (e.g., a delta file and the CRC) is transmitted to the vehicle data loader 6 for subsequent uploading to the various LRUs 18, as is commonly known in the art. However, the data 9 may be accompanied by, or may be preceded in transmission by, the software object 11.

The exemplary LRU 18 comprises at least a communication interface 17 and a processor 13. The communication interface 17 may be any interface device or software object that is configured to receive digital data and direct certain portions of the digital data received to various applications executing on the processor 13. Such applications may be stored in read-only memory (ROM) 21. One non-limiting, such exemplary application 15 may be a CRC verification algorithm 16 as may be known in the art or that may be devised in the future.

Further, the communication interface 17 receives the software object 11 from the data loader and delivers or installs the software object 11 in a random access memory (RAM) device 20 and initializes the software object in the processor 13 to execute from the RAM 20. In some embodiments the RAM 20 is associated with an aircraft's download mode such that data 9 may be uploaded and/or down loaded from various certified avionic storage locations without disturbing FAA certified databases and applications. However, when transitioning from download mode to flight mode, the RAM 20 is erased because it is not needed. Further, erasing RAM 20 provides additional memory space and ensures that no extraneous data other than certified data is accessible to the avionics applications. Because the software object 11 is erased and a CRC check is done on the combined file, the software object can be a low integrity, non-certified applet. The CRC check may be accomplished by the functions which use the databases.

Once the software object 11 is installed in the processor 13, the software object 11 receives the delta file for the flight database A (DB-A) from the data loader 6 via the communication interface 17 and combines the existing flight database A (DB-A) previously retained by the processor 13 with the accompanying or following data delta file to create a new flight database B (DB-B), which is then stored in non-volatile memory. The software object 11 interfaces with the resident onboard code (e.g. an operating system) during download mode via a suitable application programming interface (API) without changing the resident onboard code. The resident onboard code protects the data in the non-volatile memory while the avionics are in flight mode. An API is a particular set of rules and specifications that software programs can follow to communicate with each other.

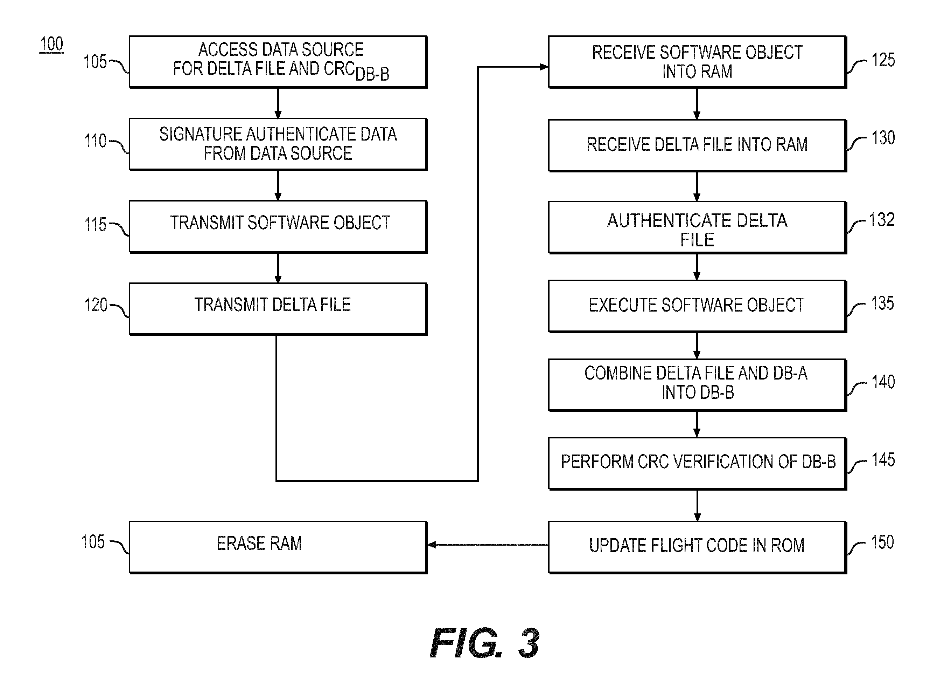

FIG. 3 is a block flow diagram of a method 100 for fast transfer of a data file. At process 105, the wireless interface device 14 accesses the data source 2 to receive a data delta file and a CRC for the final file (e.g., DB-B). At process 110, the data delta file and the CRC are authenticated to ensure that the data is being received from the proper source. Authentication may be accomplished by any suitable means in the art. Non-limiting, exemplary means for authentication includes a signature authentication, private key, using RSA algorithm, a hashed version of the database and decoding the hashed version using a public key and comparing this decoded hash result with a hash of the database generated by the receiving system.

At process 115, the software object 11 is transmitted and at process 120 the delta file is transmitted. Those of ordinary skill in the art will appreciate that the order in which the software object 11 and delta file/CRC 9 is transmitted may vary to minimize transmission time in a particular application. In preferred embodiments the software object 11 may be transmitted first such that it may be installed and initiated before the delta file is sent. In other embodiments the software object 11 and the delta files may be transmitted together or the delta file 9 may be transmitted first.

At process 125, the LRU 18 receives the software object 11, stores the software object in a RAM 20 and installs the software object 11 in the processor 12 from the RAM device. At process 130, the delta file 9 is received and stored in RAM 20.

At process 132, the delta file may be verified/authenticated by performing a CRC on the delta file to ensure that the correct delta file 9 is being utilized and that it has not been corrupted. The delta file CRC value may be contained within the same file that contains the delta CRC

At process 135, the software object is executed from the RAM 20. When executed, the software object 11 interfaces with the flight programming/databases during download mode via an API as mentioned above. The software object 11 retrieves an existing database DB-A and integrates the delta file 9 to update the existing database DB-A to produce an updated database DB-B at process 140.

It should be understood that the disclosure herein is not limited to a single database, single LRU embodiment. In other embodiments, several databases in one LRU may be updated sequentially or simultaneously in the same manner. Similarly, several LRUs may have their databases updated sequentially or simultaneously. Further, in some embodiments LRUs with databases updated in the manner described herein may share their updated databases with other LRUs.

At process 145, the CRC received by the LRU communication interface 17 provides the CRC to the CRC-B algorithm 16 to verify that the new database DB-B has been combined properly, without error. At process 150, the new database DB-B has been updated in a memory accessible by the certified software such as in a non-volatile memory. When the aircraft enters flight mode, the software object and RAM, including any computational remnants such as intermediate CRC, are erased during the transition from the download mode to the flight mode at process 155. The erasure ensures that the certified software can perform its intended functions without any affects from the software object.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for updating a base file used by certified software executing on a processor within a first computing device without breaking a certification of the software, comprising:
receiving a software object at a communications interface of the first computing device, the software object containing instructions that when executed by the processor interfaces with the certified software and integrates a delta file with the base file to create an updated file within the first computing device;
installing the software object in a random access memory (RAM) and initializing the software object in the processor from the RAM;
after installing the software object, receiving the delta file and providing the delta file for combination with the base file by the software object; and
after the combination is complete, erasing the software object from the RAM.

2. The method of claim 1, where the software object is an applet.

3. The method of claim 1, wherein the delta file accompanies the software object.

4. The method of claim 1, wherein the certified software executes from read only memory.

5. The method of claim 1, wherein the RAM is only capable of recording during a download mode of the first computing device.

6. The method of claim 5, wherein the RAM is automatically erased during a transition from the first mode to a second mode.

7. The method of claim 1, wherein the software object is accompanied by a cyclical redundancy check (CRC) designed to verify the combined base file and the delta file.

8. A system for updating a base file used by certified software that is executing on a processor within a second computing device without breaching a certification of the software, comprising:
a first computing device containing a software object recorded therein, the first computing device configured to supply a delta file that updates the base file; and
a second computing device, the second computing device comprising:
a processor;
a random access memory (RAM); and
a communication interface in electronic communication with the first computing device, the processor and the RAM, the communication interface being configured to:
receive the software object and the delta file from the first computing device, the software object containing instructions that when executed by the processor interfaces with the certified software and integrates a delta file with the base file to create an updated data file within the second computing device;
install the software object in the random access memory (RAM);
initialize the software object in the processor from the RAM;
after installing the software object, provide the delta file for combination with the base file by the software object; and
after the combination is complete, erasing the software object from the RAM.

9. The system of claim 8, where the software object is an applet.

10. The system of claim 8, wherein the delta file and the software object are received together.

11. The system of claim 8, wherein the software object is received prior to receiving the delta file.

12. The system of claim 8, wherein the certified software executes from read only memory

13. The system of claim 8, wherein the RAM is only capable of recording during a download mode of the second computing device

14. The system of claim 13, wherein the RAM is automatically erased during a transition from the first mode to a second mode.
